# EUROPEAN PATENT APPLICATION

(11) **EP 1 968 241 A1**
(43) Date of publication of application: **10.09.2008**
(21) Application number: 07004553.9
(22) Date of filing: 06.03.2007
(51) Int. Cl.: H04L 12/28, H04L 12/56, H04L 29/06

(54) **Method for gaining access to a comunication network, and a communication system**

(71) Applicant: Koninklijke KPN N.V., 2516 CK The Hague (NL)
(72) Inventor: Selgert, Franklin, 2651 BL Berkel en Rodenrijs (NL)
(74) Representative: Wuyts, Koenraad Maria

(57) **Abstract**

Method for gaining access to a communication network via a network access point, the method comprising:
-providing a communication device (1), the communication device being configured communicate with the network access point (5) for gaining network access, wherein the communication device is also configured to read information from RF-ID tags;
-providing the network access point with an RF-ID tag comprising information;
-the communication device (1) reading the information from the RF-ID tag of the network access point; and
-the communication device (1) utilizing the information, received from the RF-ID tag of the access point (5), to gain access to the network via the access point.

The invention also provides a communication system, an access point, and a communication device.

## Description

### FIELD

The invention relates to a method for gaining access to a communication network via a network access point.

The invention also relates to a communication system, a network access point and a communication device.

Communication networks having one or more local network access points, for example so called 'hotspots', are known from the prior art. In the known system, communication devices, for example mobile communicators, mobile phones, Personal Digital Assistant (PDA) devices and/or other devices, can gain access to the network (for example a telephone network, computer network, Internet) via the local network access point.

Usually, the setting up of network access via the local access point is complicated, wherein the user of the communication device has to perform various steps in order to login to the network. Particularly, in the known method, the user has to enter a username, password and hotspot SSID (Service Set Identifier) name into the communication device, for example via a keyboard. In case the correct user name, correct password and correct SSID name have been entered, the communication device can login to the network via the hotspot.

A disadvantage is that the user must have received the aforementioned information, for example via postal services, first, before he can take the steps to configure the communication device for having network access via the hotspot. Since the known method requires the user to take various steps to login, the method is not user-friendly, wherein the time involved to actually gain access to the network for a first time can be relatively long. Besides, often a user makes a mistake (for example a typo) in entering the password, user name and SSID name into the communication device, in which case the user has to repeat various login steps.

### SUMMARY

The present invention aims to provide an improved method for gaining access to a communication network. Particularly, the present invention aims to provide a method wherein network access can be provided in a simple, efficient and user-friendly manner.

According to an embodiment, to this aim, the method comprises:
- providing a communication device, the communication device being configured to communicate with the network access point for gaining network access, wherein the communication device is also configured to read information from RF-ID tags;
- providing the network access point with an RF-ID tag comprising information;
- the communication device reading the information from the RF-ID tag of the network access point; and
- the communication device utilizing the information, received from the RF-ID tag of the access point, to gain access to the network via the access point.

In this way, the communication device can automatically gain access to the network, via the network access point (for example hotspot), using RF-ID tag information. Thus, network access can be provided in a very user friendly manner, wherein a user of a communication device does not have to take any steps at all, or only some relatively straightforward steps (such as: turning on the communication device, and positioning the communication device to a location near the access point to allow communication between the communication device and the access point, and to read the tag), to have the communication device gaining access to the network. Also, the present invention can be achieved using relatively low budget means, due to the use of at least an RF-ID tag.

RF-ID tags as such are commonly known, for example for tagging products in distribution systems or shops, or for identifying athletes during races. The RF-ID tag (Radiofrequency Identification tag, or "RFID transponder") is configured to be interrogated by an RF-ID tag reader using radiofrequency interrogation signals, to read information from the tag. The tag can be a passive transponder, that does not have an integral power source, and can transmit the information automatically upon reception of an interrogation signal. The tag can also be an active transponder, which does have a power source. Until the present invention, no one came up with the simple idea, to use RF-ID tag technology in combination with network access points, particularly to provide an inexpensive and relatively easy to implement means for gaining network access via certain network access points.

The present method is also advantageous to network access point administrators, and to central network service providers of central network subscriber systems. For example, a service provider can distribute RF-ID tags to network access point administrators, so that the administrators can provide their network access points with those RF-ID tags. Also, the central service provider can distribute communication devices that are suitable or configured to read information from the RF-ID tags, to subscribers. Alternatively, the central service provider can arrange that subscriber communication devices are being reconfigured, so that the reconfigured devices can read information from the RF-ID tags. Besides, the service provider can distribute separate RF-ID tag readers to subscribers, for reading to tags; in that case, the separate tag readers can preferably cooperate with the subscriber communication devices to transmit RF-ID tag information to those devices. As a result, subscribers can automatically gain network access using their RF-ID tag reading communication devices, via the access points that have been provided with respective RF-ID tags.

According to a further embodiment of the invention, the RF-ID tag contains information relating to the access point, for example a name, address and/or location of the access point, wherein the communication device reads the access point related information, received from the access point RF-ID tag, to communicate with the access point, for example to set up a communication link with the access point.

Also, according to an embodiment, the RF-ID tag contains a password, wherein the communication device reads the password from the information, received from the access point RF-ID tag, and transmits the password to the access point to gain access to the network, for example a password to login to the access point.

Besides, advantageously, an automatic billing process can be included in the method, the billing process making use of the RF-ID tag. For example, the RF-ID tag can contain billing information relating to billing associated with network access via the access point. In a further embodiment, for example, the system can be configured such that the use of RF-ID tag information by a communication device (i.e., in case the device has read information from the tag) automatically triggers a billing process, for example utilizing or in cooperating with a central billing system.

According to a preferred embodiment, information perceptible by the human senses, for example visual information and/or sound, is being associated with the RF-ID tag, for example to provide instructions relating to gaining network access via the respective access point and/or to advertise the access point.

Also, preferably, the method comprises providing the network access point with a display, the display being integrally provided with the RF-ID tag.

Furthermore, according to an embodiment, as follows from the above, the method can include: distributing one or more of the RF-ID tags to network access points, to provide the access points with the tags. Then, preferably, one or more information providing units (for example posters) to provide information perceptible by the human senses are being distributed to the network, access points, each of the information providing units including a respective RF-ID tag.

Besides, an aspect of the invention provides a communication system comprising:
- a communication network;
- at least one network access point for providing access to the communication network; and
- at least one communication device, the communication device being configured communicate with the access point for gaining network access,
wherein at least one network access point is associated with an RF-ID tag comprising information, and the communication device comprises an RF-ID tag reader to read the information from the RF-ID tag.

The system according to the invention can be used to provide above-mentioned advantages.

Also, there is provided a network access point configured to provide access to a communication network, for example a wifi hotspot, wherein at least one RF-ID tag is associated with the network access point, the RF-ID tag containing information that can be read by a suitable RF-ID reader, and the information being selected from:
- information relating to the access point, for example a name, address and/or location of the access point;
- a password to gain access to the access point and/or network;
- a username to gain access to the access point and/or to the network;
- billing information;
- login information; and
- a network address relating to a communication device configuration tool.

Besides, the invention provides a communication device having an RF-ID tag reader, and being configured to read RF-ID tags to obtain information therefrom, the information preferably being suitable to provide the communication device access to a communication network via a network access point. The reader can be an integral part of the communication device. Alternatively, there can be provided a reader that is separate from the communication device, wherein the reader and device can cooperate with each other to read the tag. In each case, the communication device is at least associated with the reader, for reading RF-ID tags.

Further advantageous embodiments of the invention are described in the dependent claims. These and other aspects of the invention will be apparent from and elucidated with reference to non-limiting embodiments described hereafter, shown in the drawings.

### BRIEF DESCRIPTION OF THE DRAWINGS

Figure 1 schematically depicts a system according to a first embodiment of the invention; and
Figure 2 schematically depicts a system according to a second embodiment of the invention.

### DETAILED DESCRIPTION

Similar or corresponding features are denoted by similar or corresponding reference signs in the present patent application.

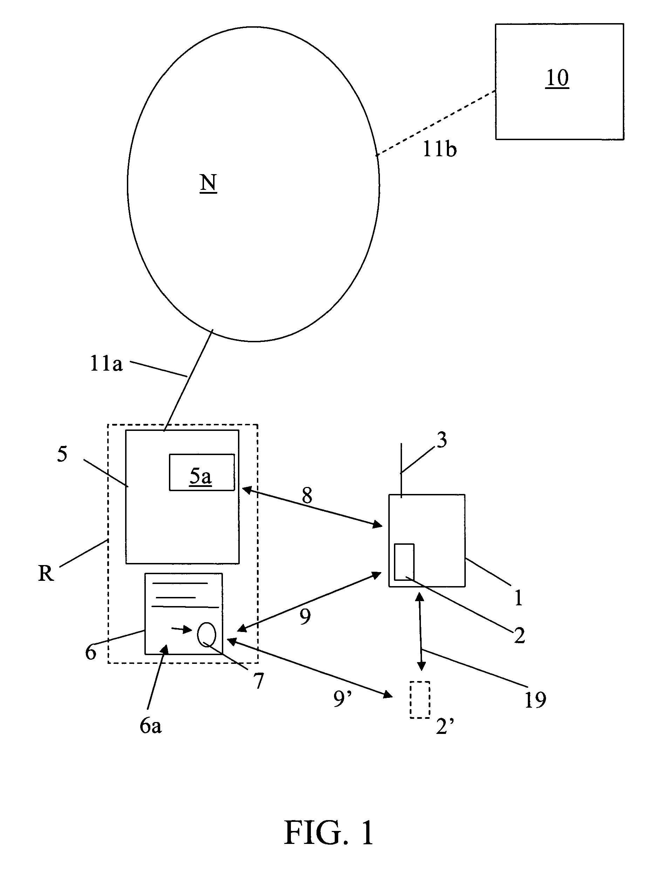

Figure 1 depicts a system comprising a communication network N and at least one network access point 5 (only one being shown). Generally, the system can include a large number of local network access points 5, for example distributed in cities, stores, offices, public areas and other places. In an embodiment, the network is a Wide Area Network (WAN), for example the internet, or a local area network (LAN) that is associated with the local network access point 5.

In a particular embodiment, the local access point 5 is a WIFI hotspot, that can be configured to allow multiple users (i.e. user communication devices) to gain access to the network N or part of the network N via wireless communication means (5a, 8).

Each local network access point 5 can include various network communication parts 5a, and can be configured to provide communication access to the network N. The network access point 5 can include one or more processors, computers, memory devices, data interfaces, network adapters, software code and/or other components to control network traffic via the access point 5 (such elements being schematically indicated by a single box 5a in fig.1), as will be appreciated by the skilled person. The local access point 5 can be part of the network N, and/or can be connected to the network N via a suitable communication link (schematically depicted by a line 11a).

Also, the system comprises communication devices 1 (only one being shown), particular one or more mobile communication devices 1. For example, each communication device can include one or more of: a portable device, cellular phone, laptop computer, PDA, handset and/or other communication device (terminal) 1. Each communication device 1 can include one or more processors, computers, a memory, data interfaces, network adapters, software code, user interfaces (for example keyboard, touch-screen, and/ speech interface), and/or other components to control the device, as will be appreciated by the skilled person. The communication device 1 is configured have access to the network N, via a network access point 5 (at least, if the access point 5 allows such access, for example after the device 1 has successfully logged into the access point 5). To this aim, the communication device 1 can gain access to the communication network N, via the network access point 5, for example using login information.

Both the network access point 5 and communication device 1 are configured to communicate with each other via one or more local (first) communication links 8, for example a wireless communication link, a radiofrequency communication link, particularly an Ethernet or local area network (LAN) link, a link according to the IEEE802.11 standard, for example a Wireless Fidelity, (WIFI) communication link 8 and/or a Bluetooth communication link 8. Alternatively, wired local communication links can be provided, for example a local USB link, firewire (IEEE 1394) , or wired Ethernet link. A local communication connection 8 between network access point 5 and device 1 can also be of a different configuration.

Also, optionally there can be provided at least one central network subscriber system 10 that can be associated with (for example including, or being communicatively connectable to) a database (not depicted as such). The central network subscriber system 10 can be configured to control network subscriptions of individual users, wherein a user that has a valid subscription can be allowed to access the network N using his/her communication device 1. The subscriber system 10 can also be connected to the network N (depicted by a dashed line 11b), for example to allow communication with the one or more local access points 5, if desired, and/or for other purposes. Optionally, users of communication devices 1 can be subscribed to gain access to the network N via one or more local access points 5, the respective subscription being controlled by the central network subscriber system 10. In an embodiment, the central network subscriber system will be controlled by a network subscription operator (operator backend), for example a network provider or a different operator, as will be appreciated by the skilled person. For example, the system can include various such subscriber systems, relating to the same network, to provide subscriptions to access the network. However, the present system can also operate without having a central subscriber system 10, if desired.

A system having a network (internet), (optional) respective network subscriber systems, local network access points (such as hotspots) and communication devices (for example cellular phones, PDAs) as such is generally known.

In the present embodiment, advantageously, at least one RF-ID tag 7 is associated with the network access point 5. Preferably, the RF-ID tag 7 contains information that can be read by a suitable RF-ID reader.

In fig. 1, the access point 5 is provided with the RF-ID tag 7. Particularly, the RF-ID tag is spatially associated with the access point, the spatial association being indicated by a dashed box R in Fig. 1. For example, dashed box R can indicate a housing containing at least one or more parts of the access points 5 and the housing comprising the tag 7. Alternatively, the dashed box R can indicate a local area, room or location, having both the access point 5 and the respective RF-ID tag.

Preferably information 6a perceptible by the human senses, for example visual information and/or sound, is being associated with the RF-ID tag, for example to provide instructions relating to gaining network access via the respective access point and/or to advertise the access point. To this aim, for example, the network access point 5 can be provided with (or at least be spatially associated with) an information providing unit 6, that is configured to provide the information 6a perceptible by the human senses. According to an embodiment, the information providing unit can simply be a display, poster, advertisement, billboard, sign, or other type of display unit, that is located near other parts of the access points 5. In the present embodiment, a display 6 is integrally provided with the respective RF-ID tag 7. Also, preferably, the display 6 is provided with an indication 6a (for example printed text, a drawing, symbols) relating to the respective RF-ID tag 7, for example an indication 6a including instructions of the use of the RF-ID tag 7. Such instructions can be "please activate your communication device and hold your communication device here", "please contact your network operator to obtain an RF-ID tag reader device", or simply "RF-ID", and/or other types of information perceptible by the human senses. In an embodiment, the information providing unit 6 can also be configured to pronounce such information, using a loudspeaker, and/or be configured to provide such information in Braille or other tactile means, and or in a different manner.

Also, in the present embodiment, the communication device 1 comprises an RF-ID tag reader 2. The communication device 1 is configured to read RF-ID tags to obtain information there-from, utilizing the reader 2. Particularly, in the present system, the tag reader 2 of the device 1 and the RF-ID tag 7 of the access point 5 are configured such, that the reader 2 can read information contained in that tag 7.

Preferably, the RF-ID tag reader 2 is an integral part of the communication device 1; for example, a housing of the communication device 1, which housing contains means for communicating with the access point via a suitable communication link 8, can also be provided with the RF-ID tag reader. This is schematically indicated in Fig. 1 .

In a further embodiment, the communication device 1 can include suitable communication components, for example hardware and software, which can provide communication with network communication parts 5a of the access point 5, using the communication link 8, when these components are in a certain network communication state. Then, preferably, these communication device components can also be configured to operate in an RF-ID reading state, to interrogate (i.e. communicate with) a nearby RF-ID tag 7 - if available- via an RF-ID interrogation link 9 (being a second communication link, that is different from the first link 8) and using a suitable interrogation signal. For example, according to one embodiment, the communication device 1 can include an antenna 3, wherein that antenna 3 is used to communicate over the communication link 8 when the device 1 is in a network communication state, wherein the same antenna 3 is used to transmit and receive radiofrequency signals relating to RF-ID tag interrogation when the device 1 is in the RF-ID interrogation state. Besides, the device 1 can comprise different antennae to communicate with access point network communication parts 5a on one hand and an RF-ID tag on the other.

Besides, preferably, an appropriate RF-ID interrogation frequency, relating to the tag 7, can be pre-stored or entered into the communication device 1 (or at least into the reader) first, so that subsequently, the device 1 can interrogate the RF-ID tag 7 using that frequency (by emitting an interrogation signal having that frequency). Alternatively, for example, the communication device 1 can emit a sequence of different signals having different frequencies, in order to find a signal having an appropriate frequency for interrogation of the tag 7. Besides, for example, the mentioned information 6a perceptible by the human senses can provide the RF-ID tag interrogation frequency to an operator of the communication device 1, to be entered into the RF-ID tag reader, the reader 2 being configured to accept the entering of the frequency by the operator.

In one embodiment of the system, in the case that communication over the first communication link 8 involves radiofrequency communication, this communication can utilize a number (i.e. one or more) of radiofrequency channels or frequency bands that differ from (i.e. do not include) a radiofrequency used for the RF-ID tag interrogation. Alternatively, such communication over the first communication link 8 involving radiofrequency communication, can utilize at least one radiofrequency channel or frequency band that does include a radiofrequency used for the RF-ID tag interrogation.

Besides, the RF-ID tag reader can be a separate entity or device 2', being separate from or external to, for example, a housing of the communication device as such. This is schematically indicated by a dashed box 2'. For example, the separate reader 2' can be operable by the communication device 1 to to interrogate a nearby RF-ID tag 7 via a respective RF-ID interrogation link 9', wherein a separate data link 19 (for example wired or a wireless link, an USB connection, Bluetooth link, infrared link, or other suitable data link 19), is available to allow data transmission between the reader 2' and communication device 1. For example, the communication device 1 can be configured to control the separate reader 2', via the respective data link 19, to search for RF-ID tags and to interrogate an RF-ID tag 7 that has been found.

In each case, as will be appreciated by the skilled person, the RF-ID tag reader 2, 2' can be configured to transmit a radiofrequency signal to interrogate the RF-ID tag 7, and to receive information from the RF-ID tag 7. Communication between a reader 2, 2' and the tag 7 of the access point 5 is schematically indicated by double arrows 9, 9' in the drawing. For example, the reader 2, 2' can include a radiofrequency transmitter to transmit a signal suitable to activate an/or interrogate a nearby tag 7, and a receiver to receive information from a tag 7 that is/has been interrogated by the reader 2, 2'; therein, the transmitter and receiver can be separate components, but are preferably integrated with each other. The tag7 can comprise an antenna to receive an interrogation signal and to emit information contained in the tag, and suitable hardware and software, for example including a controller, memory, an optional power source, and a signal filter, being connected to the tag's antenna, to control operation of the tag 7. The configuration of RF-ID tags, respective RF-ID tag readers, and communication there-between as such is commonly known, and will therefore not be explained in more detail in the present application.

Thus, there can be provided a communication device 1, the communication device being configured to gain access to the communication network N via the network access point 5, wherein the network access point 5 is associated with the RF-ID tag 7 comprising information, and the communication device 1 comprises an RF-ID tag reader 2, 2' to read the information from the RF-ID tag 7. The RF-ID reader 2, 2' can be configured to transmit and receive radiofrequency signals to obtain the information from the RF-ID tag 7. Preferably, the communication device 1 is configured to use the information, obtained from the RF-ID tag 7, that is associated with the network access point 5, to gain access to the network N via that network access point 5.

According to a further embodiment, the information contained in the tag 7 can be selected from: information relating to the access point, for example a name, address and/or location of the access point; a password and/or username to gain access to the network; login information. Also, the tag 7 can comprise other information that can be transmitted to the communication device 1, via the respective reader 2, 2'.

The communication device 1 can be configured to receive the RF-ID tag information, which has been obtained by the reader 2, 2', and to use that information to automatically login to the access point to gain access to the network N. For example, the communication device can include a controller which is configured to control an automatic login sequence, including the receiving of the RF-ID tag information and the use of that information to access the network. For example, the communication device 1 can automatically transmit a request for gaining network access to the network access point 5, via the respective local communication link 8, the request containing at least part of the previously received RF-ID tag information (for example: login information, and/or a password and/or username ).

Besides, as mentioned above, the RF-ID tag information can include information relating to the access point, for example a name, (network) address and/or location of the access point, for example an SSID address of the access point. For example, such information may be necessary to set up a communication link 8 with the access point 5, and/or to locate the access point. In that case, the communication device 1 can automatically use the information received from the RF-ID tag 7, via the reader 2, 2', to set up a communication channel 8 with the access point, and/or to locate the access point using a correct communication address thereof.

During operation of the system of Fig. 1, there can be provided a method to allow the mobile communication device 1 to gain access to the communication network N via the network access point 5. For example, the communication device 1 can be in a preconfigured state first, in which state the device 1 can not yet obtain a desired network access, wherein the RF-ID tag 7 (at least, information provided by the tag 7) can be used to bring the communication device 1 into a configured state wherein the device 1 can gain the desired network access.

The communication device 1 can be operable to read the RF-ID tag 7, using the respective reader 2, 2' and via a suitable RF-ID interrogation link 9, 9'. In an embodiment, the communication device 1 automatically detects a nearby RF-ID tag 7 to receive information there-from. Alternatively, a user can operate the communication device 1 to attain an RF-ID detection/interrogation mode, during a desired time period, to receive information from a nearby tag 7.

During operation, the distance between tag 7 and reader 2, 2' can be relatively short range, for example one to several meters, or longer range, such more than 10 meters, depending for example on the configuration of tag and reader, as will be appreciated by the skilled person.

Also, for example, the information providing unit 6 can provide above-mentioned information 6a perceptible by the human senses, for example to make a user aware of the RF-ID tag login option, to provide instructions how to gain access to the network using the RF-ID login process, and/or for other purposes.

Thus, the communication device 1 can read the information from the RF-ID tag of the network access point 5 (using the respective reader 2,2').. Subsequently, after having obtained that information, the communication device 1 can automatically utilize the information, received from the RF-ID tag 7 of the access point 5, to gain access to the network N via the access point. Particularly, the state of the communication device can change from an above-mentioned pre-configured state to a configured state.

For example, in an embodiment, the RF-ID tag 7 can contain information relating to the access point, for example a name, address and/or location of the access point, wherein the communication device 1 reads the access point related information, received from the access point RF-ID tag, to communicate with the access point 5. For example, this information can allow the communication device 1 to obtain a communication configuration (starting from a "preconfigured state") to communication with the access point via the suitable network communication link 8.

In addition, or alternatively, the RF-ID tag 7 can contain login information, for example a password and user name, wherein the communication device 1 reads the login information from the access point RF-ID tag 7, and transmits the login information (or part thereof) to the access point 5, via a suitable communication link 8, to gain access to the network N.

As is mentioned above, the present system can be advantageous to both local access point administrators, and to central network service providers of central network subscriber systems. Besides, if desired, the RF-ID tags can be used in a billing process, for providing a communication device 1 with data that allow automatic billing regarding a desired network access, or to trigger a billing process. Also, if desired, the RF-ID tag information can be loaded to the communication device 1, using the reader 2, 2', to allow free (i.e. free of charge) network access, via the local access point, for example a full network access or a restricted network access (wherein only access to certain network parts can be obtained).

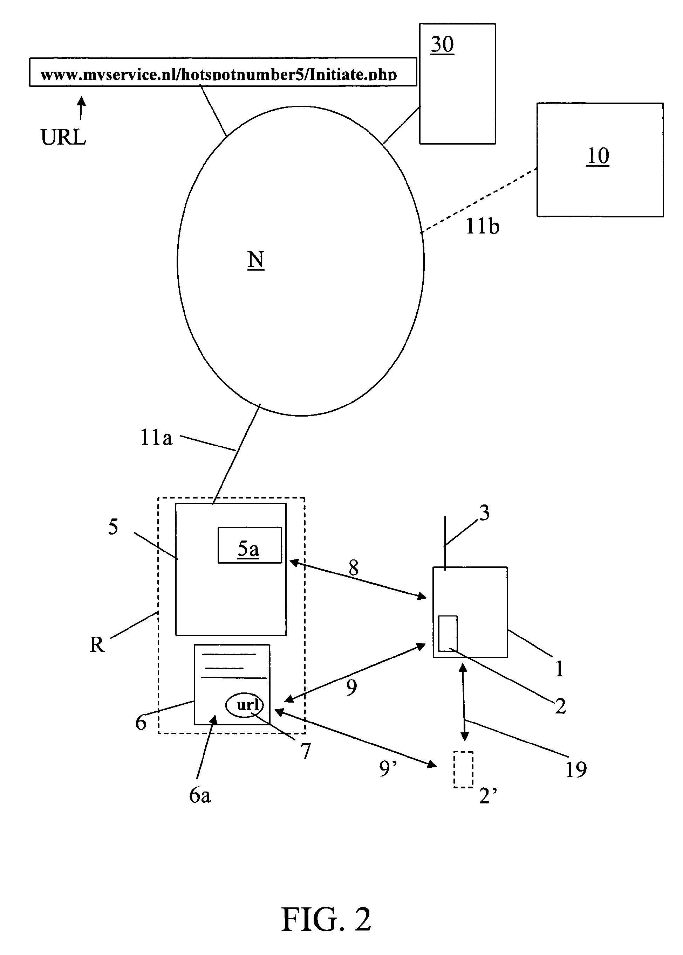

Figure 2 depicts a further embodiment of the invention. In this case, the information contained in the tag 7 comprises a network address (URL) relating to a communication device configuration tool, in the present example an URL pointing to the network site www.myservice.nl/hotspotnumber5/initiate.php that is available via the communication network N. For example, the address (URL) can be associated with that particular access point 5. For example, in case the system includes a plurality of access points, there can be provided a plurality of network addresses providing respective configuration tools, that are individually associated with those access points to provide respective network access configuration information.

Each communication device configuration tool (for example "initiate.php) is accessible via the respective network address (URL). Preferably, to that aim, the network access point 5 is configured to allow access to that particular network address (URL) to any communication device 1 requesting access to that particular address, via the communication link 8. In the present embodiment the tool ("initiate.php") can be configured to provide the communication device 1, once having accessed the tool via the address (URL), with suitable network access configuration information, to obtain access to other parts of the network.

During operation, the communication device 1 can read the mentioned network address (URL) from information received (using the respective reader 2, 2') from the access point RF-ID tag 7. The device 1 then communicates with the access point 5, via the communication link 8, to access the communication device configuration tool ("initiate.php"), that is located on the respective network address
(www.myservice.nl/hotspotnumber5/initiate.php).

In an embodiment, the configuration tool, being 'approached' or contacted by a communication device 1 via the network N, can automatically transmit certain access point login information back (via the network N, access point 5 and link 8) to the communication device 1. In a more preferred embodiment, the communication device 1 can receive or load the configuration tool ("initiate.php" in the present embodiment), for example into a processor or memory of the device 1, to be automatically reconfigured by that tool. For example, the configuration tool can be a software script that is configured to be executed by the communication device 1, and to reconfigure the device 1 for gaining network access via the access point 5.

Once having obtained the network access configuration information from the configuration tool, and particularly after having been reconfigured by that tool, the communication device 1 can access the network N via the access point 5.

Besides, in the embodiment of Fig. 2, there can be provided a central billing system 30, that can be associated with each device configuration tool network address. For example, the central billing system 30 can include a network server that is part of the network N, the network server for example being addressable via the network N to reach the configuration tool network address, or being configured to detect a request for access to that network address. The central billing system 30 can also be configured differently. In case a communication device 1 addresses the configuration tool via the network, using the respective tool's network-address (URL), the billing system 30 can initiate an automatic billing process to charge a subsequent network access that the configuration tool provides to that communication device 1. Preferably, the billing system 30 can cooperate with the respective access point 5, for example via the network N, to verify whether or not the communication device 1 has indeed obtained network access, before that network access is being charged.

Also, preferably, the billing process involves automatic transmission of communication device related identification information (for example information to identify that device, and/or information to identify a user of the device) to the billing system. In an embodiment, the communication device 1 transmits such identification information to the configuration tool network address URL and/or to the billing system 30, during operation. Also, for example, the configuration tool can be configured to have the communication device 1 transmit such identification information (for example, once the configuration tool has been loaded into the communication device 1).

The present invention can provide an improved method and system to allow a communication device 1 to gain access to a communication network N via a network access point 5, in a simple an reliable manner, for example in a substantially automated manner if desired.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Also, a single processor or other unit may fulfil functions of several means recited in the claims. Besides, one or more functions recited in the claims can be fulfilled by hardware, software, and a combination of hardware and software. Any reference sign(s) in the claims shall not be construed as limiting the scope of the claims.

For example, a single RF-ID tag can be associated with each network access point 5. Alternatively, various RF-ID tags can be provided relating to a single network access point 5. As an example, in the latter case, different RF-ID tags can comprise different information to be used to gain network access; for example, one tag can provide information that can be used to gain access to a first part of the network, and an other tag can provide information to gain access to another network part. Optional information perceptible by the human senses can be provided, to indicate the differences between those various RF-ID tags, if desired, so that a user can choose which tag his/her communication device 1 is to use or read, to gain network access.

## Claims

1. Method for gaining access to a communication network via a network access point, the method comprising:
- providing a communication device (1), the communication device being configured to communicate with the network access point (5) to gain network access, wherein the communication device is also configured to read information from RF-ID tags;
- providing the network access point with an RF-ID tag comprising information;
- the communication device (1) reading the information from the RF-ID tag of the network access point; and
- the communication device (1) utilizing the information, received from the RF-ID tag of the access point (5), to gain access to the network via the access point.

2. Method according to claim 1, wherein the RF-ID tag contains information relating to the access point, for example a name, address and/or location of the access point, wherein the communication device (1) reads the access point related information, received from the access point RF-ID tag, to communicate with the access point.

3. Method according to claim 1 or 2, wherein the RF-ID tag contains a password, wherein the communication device (1) reads the password from the information, received from the access point RF-ID tag, and transmits the password to the access point to gain access to the network.

4. Method according to any of the preceding claims, wherein the RF-ID tag contains access point login information, and the communication device reads the login information from the RF-ID tag.

5. Method according to any of the preceding claims, comprising:
- providing a communication device configuration tool, being accessible via a network address (URL) and being configured to provide a communication device (1), accessing the tool, with network access configuration information;
wherein the RF-ID tag contains the network address (URL) relating to the communication device configuration tool, wherein the communication device (1) reads the network address (URL) from the information received from the access point RF-ID tag, and uses that address (URL) to access the communication device configuration tool, to receive the network access configuration information therefrom.

6. Method according to claim 5, wherein the configuration tool transmits access point login information to the communication device.

7. Method according to any of the preceding claims, including a billing process utilizing the RF-ID tag, for billing the network access.

8. Method according to any of the preceding claims, wherein information (6a) perceptible by the human senses, for example visual information and/or sound, is being associated with the RF-ID tag, for example to provide instructions relating to gaining network access via the respective access point and/or to advertise the access point.

9. Method according to any of the preceding claims, comprising providing the network access point with a display (6), the display being integrally provided with the RF-ID tag (7).

10. Communication system comprising:
- a communication network (N);
- at least one network access point for providing access to the communication network (N); and
- at least one communication device (1), the communication device being configured to communicate with the network access point (5) for gaining network access,
wherein at least one network access point is associated with an RF-ID tag (7) comprising information, and the communication device (1) comprises an RF-ID tag reader (2, 2') to read the information from the RF-ID tag.

11. Communication system according to claim 10, wherein the RF-ID tag reader of the communication device (1) is configured to transmit and receive radiofrequency signals to obtain information from the RF-ID tag that is associated with the network access point.

12. Communication system according to claim 10 or 11, wherein the network access point is provided with an information providing unit (6), providing information perceptible by the human senses, for example visual information and/or sound, the information provided by that unit being associated with the RF-ID tag, for example to provide instructions relating to gaining network access via the respective access point and/or to advertise the access point.

13. Communication system according to any of the claims 10-12, wherein the communication device (1) is configured to use the information, obtained from the RF-ID tag that is associated with the network access point, to gain access to the network via that network access point.

14. A network access point (5) configured to provide access to a communication network, for example a wifi hotspot (5), wherein at least one RF-ID tag (7) is associated with the network access point, the RF-ID tag containing information that can be read by a suitable RF-ID tag reader (2, 2') , and the information being selected from:
- information relating to the access point, for example a name, address and/or location of the access point;
- a password to gain access to the access point and/or to the network;
- a username to gain access to the access point and/or to the network;
- billing information;
- login information; and
- a network address relating to a communication device configuration tool.

15. A communication device (1) having an RF-ID tag reader (2, 2'), and being configured to read RF-ID tags to obtain information therefrom, the information preferably being suitable to provide the communication device access to a communication network via a network access point.
